# EUROPEAN PATENT SPECIFICATION

(11) **EP 3 011 829 B1**
(45) Date of publication and mention of the grant of the patent: **20.06.2018**
(21) Application number: 15003026.0
(22) Date of filing: 22.10.2015
(51) Int. Cl.: A01K 1/015

(54) **BEDDING FOR LIVESTOCK**
LIEGEPLATZ FÜR VIEH
LITIÈRE POUR ANIMAUX D'ÉLEVAGE

(30) Priority: 22.10.2014 IT VI20140273
(43) Date of publication of application: 27.04.2016
(73) Proprietor: Edilfloor S.p.A., 36066 Sandrigo (VI) (IT)
(72) Inventor: Campagnolo, Rinaldo, 36066 Sandrigo (VI) (IT)
(74) Representative: Maiello, Helenio Francesco

(56) References cited:
- EP-A1- 1 917 852
- EP-A1- 2 165 600
- CN-A- 1 098 248
- GB-A- 1 532 161
- GB-A- 2 208 796
- JP-A- 2007 136 690
- US-A1- 2005 086 886

## Description

### Technical Field

The present invention finds application in the field of devices for the care of livestock and it has particularly for object a bedding for livestock designed to support cattle or other livestock of large or medium size, such as horses and the like, resting within a stable.

### State of the art

As known, the stables inside of great stock-breeding, in particular dairy cattle, have thereinside structures used to relief of the livestock that comprise a plurality of locations or beddings placed side by side, each of which is designed to receive an animal.

Within each bedding it is possible to distinguish an area for the body of the animal which has to allow a comfortable resting and to limit the risk of bruises against structural elements and an area for lean the head that has to allow the head to move forward during the passage from the resting position to the standing position.

The traditional beddings provided the distribution of a simple litter layer directly on the floor or on a plinth in cement or concrete.

These solutions, as far as economic, have now been almost completely supplanted in favor of solutions more hygienic and comfortable for the animal.

As matter of fact it has been found that the livestock spends over 15 hours in the beddings and therefore making comfortable situations helps to improve the well-being with benefits also on productivity, longevity and health.

In addition, improved hygiene of the beddings reduces the occurrence of diseases and other problems for the animal, such as bruises, sores and skin or muscle trauma, with beneficial effects both on the life span of the animal and on productivity and quality of the milk.

To this end, various solutions have been adopted which provide for placing damping supports with appropriate strength and resiliency properties in each bedding in order to eliminate or at least reduce the trauma caused by the fall of the animal during passage from the standing position in the resting position.

The damping supports can be coated directly with a layer of litter or provided with a suitable coating.

For example from the application WO2011054091 of Promat Inc. it is known a mattress for beddings which includes a gel damping support coated with a rubber mat.

By the same company it is also known a floor mat for beddings called Pasture Mat®, also described in US 5653195, in which the support is coated with a shock-absorbing mat made of polypropylene or polyester fiber felt with a weight of 1600gr/m² impregnated with a waterproofing liquid substance, for example a wax. US 2005/0086886 A1 describes a flooring system which includes a preformed cushion layer made up of a plurality of individual preformed cushion body sections that are sandwiched between sealant layers to provide a liquid-impervious flooring material.

Other solutions provide the use of layers of shock absorbing rubber layers coated with a mats made of textile, rubber or other generally synthetic material.

One of the main drawbacks of these known solutions is the lack of breathability of the coating mat, particularly when it is made with a waterproof synthetic top layer and possibly with minimum thickness, such as textile mats coated at their bottom with rubber, resulting in stagnation of the humors products from the animal, in particular of the sweat, which causes the onset of infections and diseases.

A further drawback is represented by the excessive abrasiveness, in particular of the solutions impregnated with waterproofing material resulting in occurrence of abrasions which, if not treated in an appropriate manner, can lead to the formation of potentially infectious excrescence.

Moreover, the known solutions have relatively high weights and are also difficult to install, since they require that the damping support will be positioned at first and subsequently the coating, which must be properly stretched at the time of positioning to cover the entire support.

Not least in the known solutions evacuation of humors from the bedding is generally carried out only providing a slight slope for the bedding, with results not satisfactory at all.

EP1917852 describes a mattress for livestock beddings formed by two outer layers of waterproof polymeric material which enclose a damping support.

This solution is not very suitable and hygienic to be used in the stable since the body fluids tend to remain on the resting surface and therefore into contact with the animal. Also, the use of thermoplastic polymeric materials for the resting surface has proved to be inconvenient and even dangerous for the animal as it does not guarantee stability. GB1532161 describes a further mattress for beddings in which the damping layer is formed with a plurality of nonwoven fabric networks welded together and on which a waterproof polymer coating is disposed. The latter can optionally be coupled to a thin layer of synthetic filaments or fibers having the purpose of improving the adhesion and comfort.

First of all this solution is little comfortable and safe because of the presence of a support with poor cushioning properties. Moreover, the coating layer does not allow a suitable drainage of body fluids which thus tend to remain in contact with the skin of the animal. In fact, the top layer made of filaments or fibers, is not designed to drain fluids but only to increase the surface friction.

### Scope of the invention

The object of the present invention is to overcome the above mentioned drawbacks, by providing a bedding for livestock that is particularly effective and cheap.

A particular object is to provide a bedding for livestock that increases the comfort and the hygiene of the animal, through the prevention of traumas, bruises from falling or decubitus and infectious phenomena related to the stagnation of the humors, in particular of sweat.

Still another object is to provide a bedding for livestock that allows to perform in a simple and economic manner the rehabilitation of existing damaged or deteriorated beddings, i.e. not more suitable to perform effectively their functions.

A further object is to provide a bedding for livestock which ensures high stability and comfort for the animal and that at the same time is lightweight, structurally stable and with high shock absorbing properties to allow long-term resting for the animal without causing damage to joints or breasts.

A particular object is to provide a bedding for livestock that is easy to install by means of a single laying operation.

Still another object is to provide a bedding for livestock that is breathable and at the same time simplify the drainage of the body fluids and their evacuation from the bedding itself.

Still another object is to provide a bedding for livestock that has high durability.

These objects, as well as others which will appear more clearly hereinafter, are achieved by a bedding for livestock that, according to claim 1. Thanks to this particular coupling on the one hand, thanks to the presence of the layer of nonwoven fabric, there will be high breathability and suitable drainage properties of the fluids and at the same time, by means of the waterproofing layer, the cushioning support of the bedding will be protected by the body fluids.

Moreover, making the upper layer of polymeric nonwoven fabric, which will set the mat on which the livestock will lie during the rest, will ensure the necessary softness of the support and avoid the provision of abrasive surfaces that may cause skin abrasion.

This bedding will be particularly light and durable, easy to transport and easy to install because it will be sufficient only one jointly laying operation of the cushioning layer and of the lining fixed together.

Preferably, the top layer may be fully of polypropylene fiber, without the presence of soakings, glues or other adhesives, with a density of between 800g/m3 and 1000 gr/m3 and with a thickness between 3mm and 10mm and preferably close to 5 mm.

This combination of features has proven to be the preferred one as regards both the drainage capacity and its anti-abrasive properties.

Preferably, said top layer may be obtained by a double needle punching and may be subjected to a first heat treatment to infrared rays and a second smoothing treatment with hot calender on both faces.

Thanks to this particular treatment, peeling, i.e. the removal of fibers due to the rubbing by the animal during the passage from the standing position to the resting position, will be eliminated or reduced appreciably.

On the contrary, the top layer will remain soft, ensuring breathability, drainage of body liquids, ensuring optimal comfort for the livestock.

In particular fiber with different DTX will be used for the upper layer, using a mixture of fibers with relatively high DTX and fibers with relatively low DTX, so as to obtain the required smoothness and peeling resistance.

Advantageously, the lower layer of insulation is made of chemically reticulated polyethylene with closed cells with a density between 80 kg m3 and 100 kg/m3, preferably 90Kg/m3, with a thickness between 2mm and 4mm.

The lower layer, in addition to protecting the area below from contact with body fluids, will improve the structural stability of the top layer allowing the handling and deformation to fit the shape of the cushioning support.

The coating thus obtained will also be particularly light and therefore easy to transport and handle, without however reducing strength.

Conveniently, the top layer and the bottom layer may be coupled to each other for their entire extension by solvent-free, hot cross-linked polyethylene glue.

This particular coupling has the advantage of being particularly stable, easy to apply and environmentally friendly as it will allow the complete recyclability of the coating.

Suitably, said cushioning support may comprise a plurality of passages that pass through the whole thickness, said passages extending optionally but preferably also through the thickness of said bottom layer of said coating and being uniformly distributed in the area of said cushioning support designed in use to support the weight of the back of the livestock.

In this way there will be the considerable advantage of increasing the breathability of the bedding, creating at the same time the channels of evacuation of the body fluids collected in the top layer of the coating, with a significant increase of the benefits for the health of the animal.

Advantageously, the layers of said cushioning support may be of chemically cross-linked polyethylene with closed cell with a thickness between 5mm and 15mm, preferably close to 10mm.

This combination of features will ensure at the same time high structural stability and high degree of cushioning.

Advantageously, the cushioning support may also comprise at least one reinforcement net in fiber glass or polymeric material interposed between two layers of said support, said reinforcing net being a stretched and biaxially net with a tensile strength coefficient and elongation in the longitudinal direction substantially coincident to the analogous coefficients in the transverse direction, in order to increase the structural stability of the cushioning support.

Advantageous forms of the invention are obtained according to the dependent claims.

### Brief disclosure of the drawings

Further features and advantages of the invention will become more apparent in light of the detailed description of some preferred but not exclusive embodiments of a bedding for livestock according to the invention, shown by way of non-limiting example with the aid of the accompanying drawings wherein:
**FIG. 1** is a not scaled side view of a coating for a bedding according to the invention in a first preferred embodiment;
**FIG. 2** is an enlarged side view of a detail of the coating of the invention in a second preferred embodiment;
**FIG. 3** is a not scaled side view of a bedding according to the invention in a first preferred embodiment not still placed on the floor of the stable;
**FIG. 4** is a side view of the bedding of Fig. 3 fixed to the floor of the stable;
**FIG. 5** is an enlarged side view of a detail of a bedding according to the invention in a second preferred embodiment;
**FIG. 6** is a perspective view of a bedding of the invention in a third preferred embodiment;
**FIG. 7** is a cross-sectional view of the bedding of Fig. 6.

### Best modes of carrying out the invention

With reference to the accompanying figures there is shown a bedding designed to be installed inside of stables for livestock and in particular, but not only, a bedding for dairy cattle, such as cows, buffaloes and cattle in general.

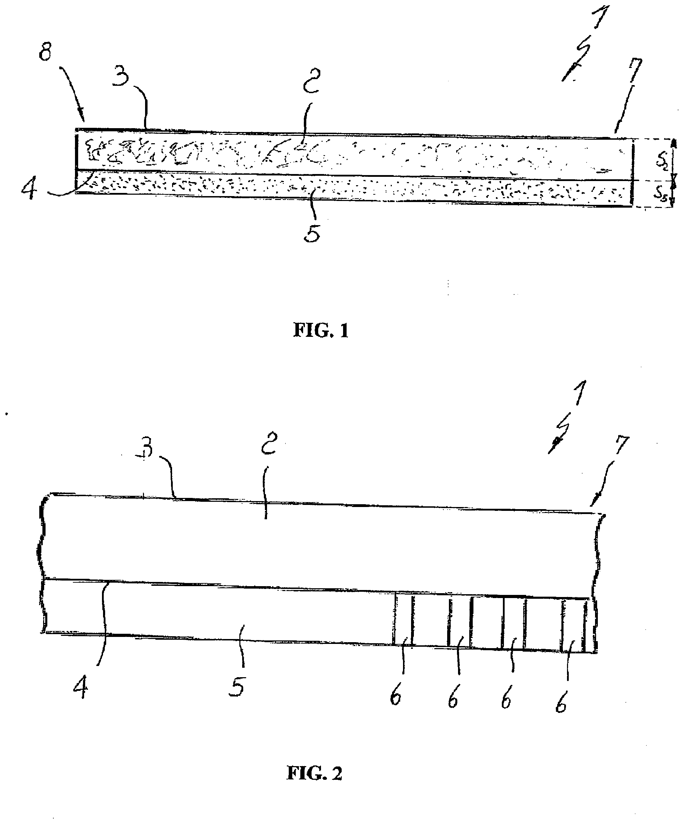

**Fig. 1** shows a first configuration of a multi-layer coating for a bedding, generally indicated by **1**, which will be particularly suitable to be applied on existing beddings having a resting mat damaged or deteriorated in order to renovate of the bedding itself.

In particular, the coating **1** will be designed to be positioned on the cushioning support of the bedding generally anchored to the floor of the stable and adapted to support the weight of a livestock.

The cushioning support, not shown in the figure, may be any support commonly used in stables, such as a mattress of foam, gels, expanded materials in general, rubber or any other material, also with low shock absorbing properties.

The coating **1** essentially comprises a top layer **2** adapted to coat in a substantially complete manner the cushioning support for at least the upper surface thereof and whose upper face **3** will define the resting surface for a livestock.

According to a particular feature, the top layer **2** is in a nonwoven fabric of polymeric material, for example with a density of between 800g/m3 and 1000 gr/m3 and a thickness **s₂** of about 5mm, which may, however, also vary and be preferably to be comprised between 3mm and 10mm.

In particular, the top layer is a nonwoven fabric completely of polypropylene fiber, without glues, adhesives or soaking agents, obtained by double needling, i.e. mechanical needle-punching on both sides, starting from a mixture of fibers with different DTX, optionally subjected to a heat treatment with infrared rays and then smoothed with a heat calender both on the upper face **3** and on the lower face **4**. The upper layer **2** thus obtained will also be hydrophobic, odorless, recyclable, resistant to acids and alkalis.

The upper layer **2** is coupled at its bottom face 4 with a waterproofing bottom layer **5** of polymeric material.

In particular, the polymeric material will be chemically cross-linked polyethylene with closed cell having a density between 80 kg/m3 and 100 kg/m3, preferably 90Kg/m3, and thickness s₅ between 2mm and 4mm, for example, about 3mm.

The lower layer will be obtained starting from the fusion of the granules of polyethylene mixed with chemical additives to obtain a molten mixture which will subsequently be distributed between two rollers which will determine the thickness and density according to the distance.

Subsequently, the polyethylene tape undergoes a heat treatment by passing through an oven in which the crosslinking and subsequently the expansion take place.

The heat will react the chemical components that will expand, forming a layer with predetermined thickness and density. Air pockets with closed cell or alveolar will also form at the inside changing the structure of the bottom layer 5 by increasing the insulation properties and resilience.

The top layer **2** and the lower layer **5** will be substantially coextensive and their coupling will be carried out for their whole extension.

In a preferred manner, the coupling will be of the hot-melt type obtained by spreading a layer of polyethylene glue, hot cross-linked and solvent-free.

**Fig. 2** shows a possible variant of the coating **1** in which the bottom layer **5** comprises a plurality of passages **6** that pass through it entirely along the direction of the thickness s₅ and which will have the aim of facilitating the evacuation of body liquids, in particular sweat, which are collected in the top layer **2**.

The passages **6** may be holes, eyelets or grooves which extend for the entire longitudinal or transverse extension of the coating **1**, or only for part thereof in order to create in any case the outlet channels.

Suitably, passages **6** will only extend on the bottom layer **5** and will not extend into the top one **2**.

For both the shown embodiments a further variant, not illustrated, may be provided wherein a stabilization net adapted to stabilize the coupling between the layers **2**, **5** and avoid particular that the top layer **2** can be deformed, reducing its elongation and improving tensile strength, is positioned between the top layer **2** and the bottom layer **5**. For example, the stabilization net will be made of fiberglass or polymeric material, in particular completely recyclable polyolefin, and it will be of the biaxial and stretched type and with a tensile strength coefficient and elongation in the longitudinal direction substantially coincident to the analogous coefficients in the transverse direction, with meshes having sides between 2cm and 3cm and weighs of 70 gr/sqm.

In all the configurations described above, the coating **1** may have any plan shape according to the requirements and in particular will be supplied in sheets with plan dimensions of 125cm * 165cm or 125cm * 180cm, to adapt to the standard dimensions of the beddings placed in stables for livestock.

Of course, the coating **1** will be made also by sheets with greater dimensions, for example 2m*100m, to be able to cover a whole row of bedding in side by side position. Operatively, after removing the mat possibly to be replace, the coating **1** will be placed on the cushioning support already in position.

The coupling between the coating **1** and the cushioning support may optionally be favored by the application of suitable mechanical fixing means or chemical bonding, selected also as function of the type of support.

Subsequently, the tails **7**, **8** of the coating that will be placed in correspondence of the longitudinal edges of the support will be folded and fixed to the floor.

In particular, the tail **7** which is to be placed in correspondence of the area designed for supporting the back of the livestock, if possible, can be folded below the cushioning support so as to be locked between the same support and the floor and to allow the complete protection of the support, once all the beddings arranged side by side have been coated.

Alternatively, the tails **7**, **8** may be fixed directly to the floor of the stable, as described in more detail hereinafter.

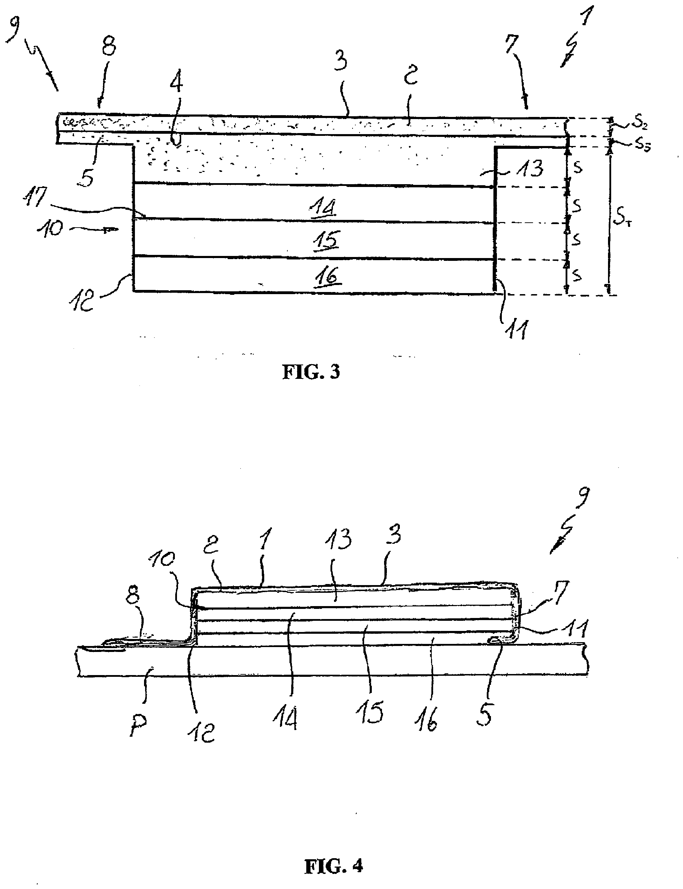

**Fig. 3** shows a first configuration of a bedding for livestock, generally indicated by **9**, comprising the coating **1** according to **Fig. 1** already coupled to a cushioning support **10** adapted to be stably anchored to the floor of the stable, so to obtain a product ready to be installed in those stables in which is necessary to build new beddings or replace entirely the bedding not more efficient.

The multi-layer coating **1** has a surface extension greater than that of the cushioning support **10** so as to have opposite longitudinal tails **7**, **8** projecting from respective end edges **11**, **12** of the support **10.**

During production the coating **1** and the cushioning support **10** may be coextensive and shaped only after their mutual coupling by means of cutting of the exceeding portions of the cushioning support **10**.

As can be seen from **Fig. 4****,** the tails **7**, **8** are designed to be fixed to the floor **P** of the stable with one of them adapted to be folded around the corresponding edge portion 11 of the cushioning support **10**, substantially adhering thereto to wrap it in a substantially complete manner and to allow the total protection of the support **10** as previously said, while also preventing the support **10** from moving under the weight of the livestock. The cushioning support **10** has a multilayer structure with a plurality of superimposed layers of polymeric material having same or differentiated density, with the outer layers having a density greater than the internal ones.

For example four layers **13-16** may be provided which are made of chemically cross-linked closed cell polyethylene obtained by a process analogous to that described for the bottom layer **5** of the coating 1.

In a particular embodiment, the outer layers **13**, **16** will have a density of 90Kg/m3 while the inner layers **14, 15** will have a density of 50Kg /m3.

According to another embodiment the layers **13**-**16** will have all the same density of 100Kg/m3.

Each layer **13-16** will have a thickness s close to 10mm and they will be mutually coupled by means of glue polyethylene, hot cross-linked and solvent-free.

However, the number of layers may also be different and at most only one layer in any elastomeric material could be provided.

The thickness **s** of the layers may also be between 5mm and 15mm, with an overall thickness **s_{T}** of the support **10**, however between 30mm and 50mm and preferably close to 40 mm.

The layer **13** may be unitary with the bottom layer **5** of the coating **1** and in particular the two layers **5**, **13** may be made from a single layer having a thickness equal to the sum of the individual thicknesses **s₅**, **s** and which will be shaped at the time of cutting the exceeding portions of the cushioning support **10**.

Between two of these layers **13-16,** such as the intermediate layers **14**, **15**, or even more preferably between the two upper layers **13**, **14**, a reinforcement net **17** made of fiberglass or polymeric material may also be disposed.

The net **17** will be a stretched and biaxial net with a tensile strength coefficient and elongation in the longitudinal direction substantially coincident to the analogous coefficients in the transverse direction.

In a preferred but exemplifying embodiment, the net **17** will be a heat-welded net of alkaline fiberglass with a mesh of 12mm and weight of 120g/m² with a traction breaking strength greater than 35 kN/m, preferably close to 100kN/m.

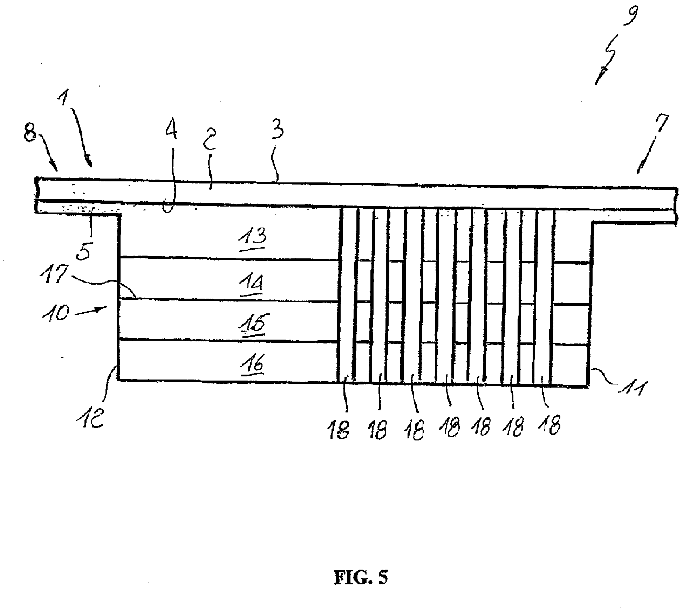

**Fig. 5** shows a variant of the bedding **9** in which the cushioning support **10** comprises a plurality of passages **18** that pass through the entire thickness s_{T} and which also extend through the thickness **s₅** of the bottom layer **5** of the coating **1**, without extending in the top layer **2.**

Also in this case the passages **18** may be holes, eyelets, grooves or draining channels otherwise shaped that pass through the cushioning support **10** for its entire longitudinal and/or transverse extension or only partially.

Preferably the passages **18** may be evenly distributed at least in the cushioning support **10** designed to support during use the weight of the back of the livestock.

When both the reinforcing net **17** and the passages **6, 18** are provided for, either only for the coating **1** or only for the cushioning support **10** or in the case in which both have the net and the passages, the passages **6**, **18** will have to be realized in correspondence of the center of the mesh of the net in order to avoid the net to be damaged so to reduce its mechanical properties.

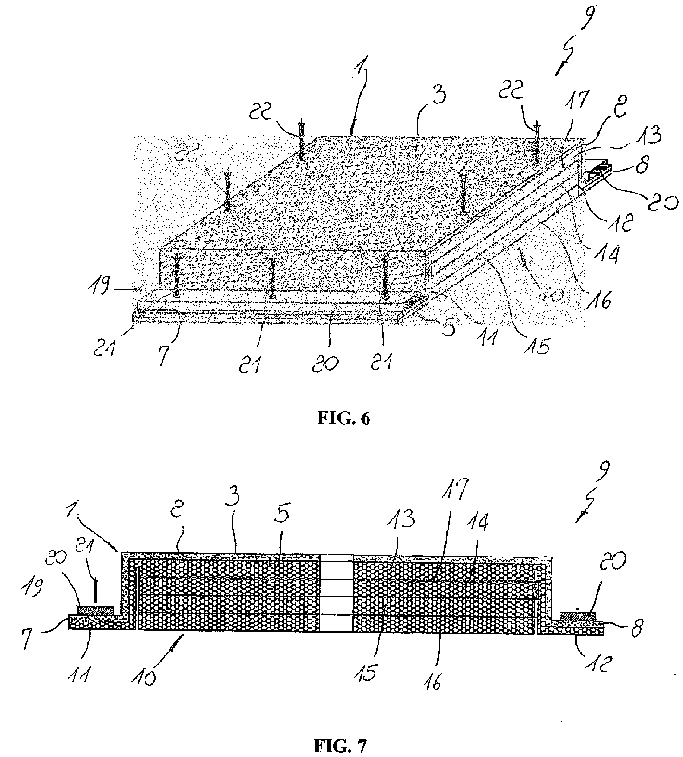

**Fig. 6** shows a further configuration of the beddings **9** which differs from the one above for the fact that the tails **7**, **8** of the coating **1** are folded both thorough the outside and fixed to the floor by fixing means **19**.

These fixing means **19** comprise a pair of bars **20** superimposed on respective tails **7**, **8** and fixed to the floor of the stable by means of a plurality of first mechanical fastening elements **21**, such as screws, or the like. Furthermore, the fixing means **19** comprise a plurality of second mechanical fastening elements **22**, for example screws, passing through side portions of the coating **1** and of the cushioning support **10** to anchor them firmly to the floor.

According to a particular variant, the top layer **2** of the coating **1** is at least partially coated with a layer of impermeable, preferably transparent thermoadhesive resin, applied by hot spreading of the Hot Melt type.

The layer of resin may be distributed over the entire extension of the top layer **2** of the coating 1, or for only a portion thereof, for example in the band of about 60 cm in width generally designed for supporting the back part of livestock and that therefore is subjected to a greater contact with the liquid stools.

The layer of resin may be distributed so as to coat in a complete manner the treated coating portion or in a discontinuous but still uniform manner. For example, the resin layer may cover a portion of the coating with an extension between 30% and 80% of its total surface extension.

This resin layer will aim to increase the water resistance of the coating **1** but without compromising the breathability and facilitating cleaning.

From what described it appears evident that the coating and the bedding according to the invention reach the intended objects.

## Claims

1. A bedding for livestock, comprising:
- a cushioning support (**10**) adapted to be anchored to the floor of the stable to support the weight of a livestock;
- a coating (**1**) anchored over said cushioning support (**10**) and having at least one top layer (**2**) made of polymeric material adapted to coat in a substantially complete manner said cushioning support (**10**) to define a resting area (**3**) for the livestock;
**characterized in that** said coating (**1**) is a multilayer coating positioned on said cushioning support (**10**) and comprising said top layer (**2**) and at least one waterproofing bottom layer (**5**) of polymeric material covering said cushioning support (**10**) and being placed over it, said top layer (**2**) being made of a polymeric nonwoven fabric, said top layer (**2**) and said bottom layer (5) being reciprocally coupled for their full surface extension, said cushioning support (**10**) comprising a plurality of superimposed layers (**13-16**) of polymeric material with closed cells.

2. Bedding as claimed in claim 1, **characterized in that** said top layer (**2**) is completely in polypropylene fiber without soaking, glues or adhesives, with a density between 800g/m3 and 1000g/m3 and has a thickness (**s₂**) between 3mm and 10mm and preferably close to 5 mm.

3. Bedding as claimed in any preceding claim, **characterized in that** it comprises a layer of thermo-adhesive waterproof resin coating at least partially said top layer (**2**).

4. Bedding as claimed in claim 3, **characterized in that** said layer of resin covers said top layer (**2**) in a discontinuous manner up for an extension between 30% and 80% of the total surface extension of said top layer (**2**).

5. Bedding as claimed in any preceding claim, **characterized in that** said bottom layer (**5**) is made of chemically cross-linked polyethylene with closed cell with a density between 80 kg/m3 and 100 kg/m3, preferably 90Kg/m3, and a thickness (**s₅**) between 2mm and 4mm

6. Bedding as claimed in any preceding claim, **characterized in that** it comprises a layer of hot cross-linked, solvent-free polyethylene glue spread between said top layer (**2**) and said bottom layer (**5**) for coupling each other for their entire surface extension.

7. Bedding as claimed in any preceding claim, **characterized in that** said multilayer coating (**1**) has greater surface extension of said cushioning support (**10**) with opposite longitudinal tails (**7, 8**) projecting from respective end edges (**11, 12**) of said support (**10**), said tails (**7, 8**) being adapted to be secured to the floor (**P**) of the stable by fixing means (**19**).

8. Bedding as claimed in claim 7, **characterized in that** one of said tails (**7**) is folded around the corresponding edge portion (**11**) of said cushioning support (**10**) to wrap it in a substantially complete manner.

9. Bedding as claimed in claim 7 or 8, **characterized in that** said fixing means (**19**) comprise one or more bars (**20**) overlapping respective of said tails (**7**, **8**) and fixed to the floor of the stable by a plurality of first mechanical fastening elements (**21**), such as screws, or the like.

10. Bedding as claimed in any claim 7 to 9, **characterized in that** said fixing means (**19**) comprise a plurality of second mechanical fastening elements (**22**) passing through side portions of said coating (1) and of said cushioning support (**10**) to anchor firmly them to the floor.

11. Bedding as claimed in any preceding claim, **characterized in that** said cushioning support (**10**) comprises a plurality of passages (**18**) that pass through the whole thickness (**s_{T}**) thereof, said passages (**18**) extending also through the thickness (**s₅**) of said bottom layer (**5**) of said coating (**1**) without affecting said top layer (**2**) and being uniformly distributed at least in the area of said cushioning support (**10**) designed in use to support the weight of the back of livestock.

12. Bedding as claimed in any preceding claim, **characterized in that** said layers (**13-16**) of said cushioning support (**10**) are made of closed cell chemically crosslinked polyethylene, each with thickness (**s**) between 5mm and 15mm, preferably close to 10mm.

13. Bedding as claimed in any preceding claim, **characterized in that** said layers (**13-16**) of said cushioning support (**10**) have same density of 100kg/m3.

14. Bedding as claimed in any preceding claim, **characterized in that** said cushioning support (**10**) comprises at least one reinforcement net (**17**) in fiber glass or polymeric material interposed between two of said layers (**13-16**) of said support (**10**), said reinforcement net (**17**) being a stretched and biaxial net with a coefficient of tensile strength and elongation in the longitudinal direction substantially coincident to the analogous coefficients in the transverse direction.

## Patentansprüche

1. Einstreu für Vieh, umfassend:
- eine Dämpfungsunterlage (**10**), die angepasst ist, um am Boden des Stalls verankert zu werden, um das Gewicht eines Viehs zu tragen;
- einen Überzug (**1**), der über der Dämpfungsunterlage (**10**) verankert ist und mindestens eine Oberschicht (**2**) aus Polymermaterial aufweist, das angepasst ist, um die Dämpfungsunterlage (**10**) auf eine im Wesentlichen vollständige Weise zu überziehen, um einen Ruhebereich (**3**) für das Vieh zu definieren;
**dadurch gekennzeichnet, dass** der Überzug (**1**) ein vielschichtiger Überzug positioniert auf der Dämpfungsunterlage (**10**) ist und die Oberschicht (**2**) und mindestens eine wasserdichte Bodenschicht (**5**) aus Polymermaterial umfasst, die die Dämpfungsunterlage (**10**) abdecken und darüber platziert sind, wobei die Oberschicht (**2**) aus einem Polymervliesstoff ist, wobei die Oberschicht (**2**) und die Bodenschicht (5) gegenseitig über ihre volle Oberflächenweite gekoppelt sind, wobei die Dämpfungsunterlage (**10**) eine Vielzahl von übereinanderliegenden Schichten (**13-16**) aus Polymermaterial mit geschlossenen Zellen umfasst.

2. Einstreu nach Anspruch 1, **dadurch gekennzeichnet, dass** die Oberschicht (**2**) vollständig aus Polypropylenfaser ohne Durchtränken, Leime oder Klebstoffe ist, mit einer Dichte zwischen 800 g/m3 und 1000 g/m3 und eine Stärke (**s₂**) zwischen 3 mm und 10 mm und vorzugsweise nahe bei 5 mm hat.

3. Einstreu nach einem vorherigen Anspruch, **dadurch gekennzeichnet, dass** sie eine Schicht aus wärmeklebendem wasserdichtem Harzüberzug umfasst, die mindestens teilweise die Oberschicht (**2**) überzieht.

4. Einstreu nach Anspruch 3, **dadurch gekennzeichnet, dass** die Schicht aus Harz die Oberschicht (**2**) auf eine nicht kontinuierliche Weise über eine Weite von zwischen 30 % und 80 % der gesamten Oberflächenweite der Oberschicht (**2**) abdeckt.

5. Einstreu nach einem vorherigen Anspruch, **dadurch gekennzeichnet, dass** die Bodenschicht (**5**) aus chemisch vernetztem Polyethylen mit geschlossenen Zellen mit einer Dichte zwischen 80 kg/m3 und 100 kg/m3, vorzugsweise 90 kg/m3, und einer Stärke (**s₅**) zwischen 2 mm und 4 mm ist.

6. Einstreu nach einem vorherigen Anspruch, **dadurch gekennzeichnet, dass** sie eine Schicht aus heißvernetztem, lösungsmittelfreien Leim umfasst, der zwischen der Oberschicht (**2**) und der Bodenschicht (**5**) ausgebreitet ist, um sie untereinander über ihre gesamte Oberflächenweite zu koppeln.

7. Einstreu nach einem vorherigen Anspruch, **dadurch gekennzeichnet, dass** der vielschichtige Überzug (**1**) eine größere Oberflächenweite der Dämpfungsunterlage (**10**) hat, wobei Längsenden (**7**, **8**) von jeweiligen Endkanten (**11**, **12**) der Unterlage (**10**) hervorstehen, wobei die Enden (**7**, **8**) angepasst sind, um am Boden (**P**) des Stalls durch Befestigungsmittel (**19**) befestigt zu werden.

8. Einstreu nach Anspruch 7, **dadurch gekennzeichnet, dass** eines der Enden (**7**) um den entsprechenden Randabschnitt (**11**) der Dämpfüngsunterlage (**10**) gefaltet ist, um sie auf eine im Wesentlichen vollständige Weise zu umhüllen.

9. Einstreu nach Anspruch 7 oder 8, **dadurch gekennzeichnet, dass** die Befestigungsmittel (**19**) eine oder mehrere Stäbe (**20**) umfassen, die jeweilige der Enden (**7, 8**) überlappen und am Boden des Stalls durch eine Vielzahl von ersten mechanischen Befestigungselementen (**21**), wie z. B. Schrauben, oder dergleichen befestigt sind.

10. Einstreu nach einem der Ansprüche 7 bis 9, **dadurch gekennzeichnet, dass** die Befestigungsmittel (**19**) eine Vielzahl von zweiten mechanische Befestigungselemente (**22**) umfassen, die durch Seitenabschnitte des Überzugs (**1**) und der Dämpfungsunterlage (**10**) verlaufen, um diese fest am Boden zu befestigen.

11. Einstreu nach einem vorherigen Anspruch, **dadurch gekennzeichnet, dass** die Dämpfungsunterlage (**10**) eine Vielzahl von Durchgängen (**18**) umfasst, die durch die gesamte Stärke (**s_{T}**) davon verlaufen, wobei sich die Durchgänge (**18**) auch durch die Stärke (ss) der Bodenschicht (**5**) des Überzugs (**1**) erstrecken, ohne die Oberschicht (**2**) zu beeinträchtigen, und die mindestens im Bereich der Dämpfungsunterlage (**10**) gleichförmig verteilt sind, die konstruiert ist, um in der Verwendung das Gewicht des Rücken des Viehs zu tragen.

12. Einstreu nach einem vorherigen Anspruch, **dadurch gekennzeichnet, dass** die Schichten (**13-16**) der Dämpfungsunterlage (**10**) aus chemisch vernetztem Polyethylen mit geschlossenen Zellen sind, jeweils mit einer Stärke (**s**) zwischen 5 mm und 15 mm, vorzugsweise nahe bei 10 mm.

13. Einstreu nach einem vorherigen Anspruch, **dadurch gekennzeichnet, dass** die Schichten (**13-16**) der Dämpfungsunterlage (**10**) dieselbe Dichte von 100 kg/m3 haben.

14. Einstreu nach einem vorherigen Anspruch, **dadurch gekennzeichnet, dass** die Dämpfungsunterlage (**10**) mindestens ein Verstärkungsnetz (**17**) aus Fiberglas oder Polymermaterial umfasst, zwischengelegt zwischen zwei der Schichten (**13-16**) der Unterlage (**10**), wobei das Verstärkungsnetz (**17**) ein gedehntes und zweiachsiges Netz ist, wobei ein Zugfestigkeits- und Dehnungskoeffizient im Wesentlichen übereinstimmend mit den analogen Koeffizienten in die Querrichtung ist.

## Revendications

1. Litière pour le bétail, comprenant :
- un support capitonné (**10**) adapté pour être fixé au sol de l'écurie et supporter le poids du bétail ;
- un revêtement (**1**) fixé au dit support capitonné (**10**) et contenant au moins une couche supérieure (**2**) faite en matière polymère adaptée pour revêtir de manière substantiellement complète ledit support capitonné (**10**) et définir une zone de repos (**3**) pour le bétail ;
**caractérisée en ce que** ledit revêtement (**1**) est un revêtement multicouches positionné sur ledit support capitonné (**10**) et comprenant ladite couche supérieure (**2**) et au moins une couche inférieure imperméable (**5**) en matière polymère couvrant ledit support capitonné (**10**) et placée sur celui-ci, la dite couche supérieure (**2**) étant faite en fibre de polymère non-tissé, ladite couche supérieure (**2**) et ladite couche inférieure (5) étant réciproquement associées sur leur surface d'extension complète, ledit support capitonné (**10**) comprenant une pluralité de couches superposées (**13-16**) en matière polymère à cellules fermées.

2. Litière selon la revendication 1, **caractérisée en ce que** ladite couche supérieure (**2**) est complètement en fibre polypropylène sans trempage, colle ni adhésifs, avec une densité comprise entre 800g/m3 et 1000g/m3 et une épaisseur (**s₂**) comprise entre 3mm et 10mm, de préférence proche de 5 mm.

3. Litière selon l'une quelconque des revendications précédentes, **caractérisée en ce qu'**elle comprend une couche de résine imperméable thermoadhésive revêtant au moins en partie ladite couche supérieure (**2**).

4. Litière selon la revendication 3, **caractérisée en ce que** ladite couche de résine couvre ladite couche supérieure (**2**) de manière discontinue pour une extension de 30% à 80% de la surface d'extension totale de ladite couche supérieure (**2**).

5. Litière selon l'une quelconque des revendications précédentes, **caractérisée en ce que** ladite couche inférieure (**5**) est faite en polyéthylène réticulé chimiquement à cellules fermées avec une densité comprise entre 80 kg/m3 et 100 kg/m3, de préférence 90Kg/m3, et une épaisseur (**s₅**) comprise entre 2mm et 4mm.

6. Litière selon l'une quelconque des revendications précédentes, **caractérisée en ce qu'**elle comprend une couche de colle polyéthylène réticulé chimiquement à chaud sans solvant étalée entre ladite couche supérieure (**2**) et ladite couche inférieure (**5**) pour associer les deux sur leur surface d'extension complète.

7. Litière selon l'une quelconque des revendications précédentes, **caractérisée en ce que** ledit revêtement multicouches (**1**) dispose d'une surface d'extension supérieure à celle dudit support capitonné (**10**) avec deux rebords longitudinaux (**7**, **8**) dépassant des bouts respectifs (**11**, **12**) dudit support (**10**), lesdits rebords (**7**, **8**) étant adaptés pour être fixés au sol (**P**) de l'écurie avec des attaches de fixation (**19**).

8. Litière selon la revendication 7, **caractérisée en ce que** l'un desdits rebords (**7**) est plié autour du bout correspondant (**11**) dudit support capitonné (**10**) afin de l'envelopper de manière substantiellement complète.

9. Litière selon la revendication 7 ou 8, **caractérisée en ce que** lesdites attaches de fixation (**19**) comprennent une ou plusieurs barres (**20**) superposées sur lesdits rebords (**7**, **8**) et fixées au sol de l'écurie par une pluralité de éléments de fixation mécaniques primaires (**21**), tels que des vis, ou des éléments semblables.

10. Litière selon l'une quelconque des revendications 7 à 9, **caractérisée en ce que** lesdites attaches de fixation (**19**) comprennent une pluralité de élements de fixation mécaniques secondaires (**22**) passant à travers des parties latérales dudit revêtement (**1**) et dudit support capitonné (**10**) pour les attacher fermement au sol.

11. Litière selon l'une quelconque des revendications précédentes, **caractérisée en ce que** ledit support capitonné (**10**) comprend une pluralité de passages (**18**) qui passent à travers toute l'épaisseur (**s_{T}**) de celui-ci, lesdits passages (**18**) s'étendant également à travers l'épaisseur (**s₅**) de ladite couche inférieure (**5**) dudit revêtement (**1**) sans affecter ladite couche supérieure (**2**) et étant uniformément répartis au moins dans la zone dudit support capitonné (**10**) conçu pour supporter le poids du postérieur du bétail.

12. Litière selon l'une quelconque des revendications précédentes, **caractérisée en ce que** lesdites couches **(13-16)** dudit support capitonné (**10**) sont faites en polyéthylène réticulé chimiquement à cellules fermées, chacune d'une épaisseur (**s**) comprise entre 5mm et 15mm, de préférence proche de 10mm.

13. Litière selon l'une quelconque des revendications précédentes, **caractérisée en ce que** lesdites couches **(13-16)** dudit support capitonné (**10**) ont une même densité de 100kg/m3.

14. Litière selon l'une quelconque des revendications précédentes, **caractérisée en ce que** ledit support capitonné (**10**) comprend au moins un filet de renforcement (**17**) en fibre de verre ou en matériel polymère interposé entre deux desdites couches (**13-16**) dudit support (**10**), ledit filet de renforcement (**17**) étant un filet tendu et biaxial avec un coefficient de résistance au déchirement et d'élongation dans le sens longitudinal qui coïncide de manière substantielle aux coefficients analogues dans la direction transversale.
